(19) Europäisches Patentamt
European Patent Office
Office européen des brevets

(11) **EP 3 296 755 B1**

(12) **EUROPÄISCHE PATENTSCHRIFT**

(45) Veröffentlichungstag und Bekanntmachung des Hinweises auf die Patenterteilung:
**23.03.2022  Patentblatt 2022/12**

(21) Anmeldenummer: **16188732.8**

(22) Anmeldetag: **14.09.2016**

(51) Internationale Patentklassifikation (IPC):
**G01R 31/34** (2020.01)        **G05B 11/01** (2006.01)
**H02P 23/14** (2006.01)

(52) Gemeinsame Patentklassifikation (CPC):
**G05B 11/01; H02P 23/14**

(54) **ERMITTLUNG VON LASTGRÖSSEN IM LAUFENDEN BETRIEB**

DETERMINATION OF LOAD SIZES IN CURRENT OPERATION

DÉTERMINATION D'AMPLEURS DE CHARGE EN COURS DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.03.2018  Patentblatt 2018/12**

(73) Patentinhaber: **Siemens Aktiengesellschaft**
**80333 München (DE)**

(72) Erfinder:
• **Nolte, Uwe**
**30890 Barsinghausen (DE)**
• **Braatz, Uwe**
**30455 Hannover (DE)**
• **Piatkowski, Martin**
**38239 Salzgitter (DE)**

(56) Entgegenhaltungen:
WO-A1-2015/110341          CN-A- 103 048 620
DE-A1-102006 043 896       DE-A1-102011 121 839
DE-A1-102015 200 609       DE-B3-102010 064 217
JP-A- H05 332 875          US-A- 5 428 285
US-A1- 2001 037 691        US-A1- 2010 226 157

• **IOHIMOVICH ANASTASIA D ET AL: "The development of the direct electric drive system of a radar station antenna", 2013 14TH INTERNATIONAL CONFERENCE OF YOUNG SPECIALISTS ON MICRO/NANOTECHNOLOGIES AND ELECTRON DEVICES, IEEE, 1. Juli 2013 (2013-07-01), Seiten 300-304, XP032513633, ISSN: 2325-4173, DOI: 10.1109/EDM.2013.6642000 ISBN: 978-1-4799-0761-8 [gefunden am 2013-10-20]**
• **BRAD P ET AL: "ANGULAR ACCELERATION MEASUREMENT WITH EDDY-CURRENT SENSOR", ELECTROMOTION 2001,, 19. Juni 2001 (2001-06-19), Seiten 169-172, XP008036167,**

**Beschreibung**

Die Erfindung betrifft ein Verfahren zur Ermittlung von Lastgrößen eines durch einen Elektromotor antreibbaren Objekts im laufenden Betrieb, unter Verwendung eines Motorstroms und einer Winkelgeschwindigkeit des Motors.

Insbesondere für Systeme mit Gleichstrom- oder permanenterregten Synchronmotoren eignet sich das Verfahren besonders. Des Weiteren betrifft die Erfindung ein Steuerungs- und/oder Regelungsverfahren, bei dem die mittels des erfindungsgemäßen Verfahrens ermittelten Größen berücksichtigt werden, eine Motorsteuerung sowie ein Antriebssystem.

Ein derartiges Verfahren kommt beispielsweise in der industriellen Automatisierung oder der Gebäudeautomatisierung, insbesondere bei automatischen Türen, zum Einsatz.

Aus dem Stand der Technik sind Verfahren bekannt, die es ermöglichen, mittels einer definierten Messfahrt Lastgrößen zu ermitteln.

Beispielsweise ist aus der DE 10 2014 201 399 A1 ein Verfahren zur Ermittlung einer bewegten Masse m eines Türsystems, das von einem Elektromotor angetrieben wird, bekannt. Dort wird die elektrische Leistung bei einer bestimmungsgemäßen Öffnungs- und/oder Schließfahrt des Türsystems jeweils von Beginn des Antriebs der Masse durch den Elektromotor aus einer Ausgangsruhelage bis Erreichen einer Endruhelage nach Beendigung des Antriebs zur Ermittlung von Energieverlusten, z.B. durch Reib- und/oder Schließkräfte, aufsummiert.

Die Ermittlung von Lastgrößen ist ebenfalls aus JP H05 332875 A, US 2001/037691 A1, US 5 428 285 A sowie US 2010/226157 A1 bekannt.

Der vorliegenden Erfindung liegt die Aufgabe zugrunde, ein Verfahren anzugeben, das es auch bei komplexen und/oder nicht einheitlichen Randbedingungen, z.B. während dem laufenden Betrieb und auch mehrfach während einer Fahrt, ermöglicht ein oder mehrere Lastgrößen robust zu ermitteln. Weiterhin ist es Aufgabe der Erfindung ein Steuerungs- und/oder Regelungsverfahren, eine Motorsteuerung und ein Antriebssystem anzugeben.

Zur Lösung der Aufgabe werden folgende Schritte vorgeschlagen:

- Bestimmen einer Energie in einem ersten Intervall als eine integrale Funktion von Motorstrom und der Winkelgeschwindigkeit über die Zeit sowie einer ersten Motorkonstante des Motors,
- Bestimmen eines Drehimpulses in einem zweiten Intervall als eine integrale Funktion von Motorstrom über die Zeit sowie einer zweiten Motorkonstante des Motors,
- Bestimmen zumindest einer der Lastgrößen im jeweiligen Intervall unter Verwendung der Energie und des Drehimpulses.

Lastgrößen sind dabei als Größen zu verstehen, die auf den Elektromotor als Last wirken, beispielsweise das Trägheitsmoment eines antreibbaren Objekts im rotierenden bzw. die Masse im linearen Fall. Beispielsweise kann es sich dabei um eine Tür handeln, die zwar rotatorisch angetrieben wird, deren Bewegung aber über einen Riemen oder eine Kette in eine lineare Bewegung umgesetzt wird. Es sind aber jegliche weiteren rein rotatorisch oder rotatorisch-linear antreibbaren Systeme denkbar. Im Folgenden werden stellvertretend immer die rotatorischen Größen betrachtet, die aber bei entsprechenden Systemen ineinander Umgerechnet werden können und damit als Äquivalent anzusehen sind. Weitere Beispiele sind das Reibmoment bzw. die Reibkraft, die jeweils auf den Elektromotor wirken und bei der Ansteuerung des Motors zu berücksichtigt werden können.

Die erste und die zweite Motorkonstante können dabei entsprechend der Modellierung angepasste Konstanten oder sogar eine gemittelte Konstante sein, die den jeweiligen Anwendungsfall abdeckt. Vom Hersteller angegebene Motorkonstanten beschreiben dabei oftmals den Zusammenhang des messbaren Stroms im Elektromotor und das vom Elektromotor abgegebene Drehmoment oder auch die im Elektromotor induzierte Gegenspannung und deren Zusammenhang mit der Drehzahl bzw. der Winkelgeschwindigkeit des Elektromotors. Es hat sich dabei als vorteilhaft erwiesen, im Vorfeld eine quasi ideale Motorkonstante zu errechnen, z.B. aus den im Datenblatt der Motoren angegebenen Konstanten. Auf diese Art und Weise lässt sich aus dem Produkt aus Motorstrom und gegen-elektromotorische Kraft, auch Gegen-EMK, die ins System eingespeiste mechanische Leistung bestimmen, die bei der späteren Berechnung der Integralen Funktionen zum Einsatz kommen kann.

Im laufenden Betrieb soll dabei andeuten, dass keine besonderen Anforderungen an die Randbedingungen des Verfahrens gestellt werden. D.h. das Verfahren kann einfach "online" mitlaufen und zu gegebenen Zeiten bzw. Intervallen kann, auch mehrfach während des laufenden Betriebs, eine Auswertung der Lastgrößen stattfinden. Eine eigens dafür ausgelegte Messfahrt ist zur Auswertung der Lastgrößen nicht notwendig. Der Motorstrom kann beispielsweise in einer Leistungselektronik zur Ansteuerung des Elektromotors gemessen werden, oder dort auch einfach als Stellwert unter Berücksichtigung eines Wirkungsgradfaktors abgegriffen werden. Die Winkelgeschwindigkeit kann beispielsweise über einen Encoder erfasst werden, es ist aber auch ebenso denkbar, dass mittels einer entsprechenden Leistungselektronik die Winkelgeschwindigkeit sensorlos erfasst werden kann. Auch Pulsverfahren, die einen Rückschluss auf den Winkel bzw. die Winkelgeschwindigkeit liefern, sind hier denkbar.

Die Energie kann prinzipiell über eine Integration eines Momentengleichgewichts über den Weg ermittelt werden. Um das Verfahren für den Einsatz im laufenden Betrieb zu ertüchtigen, wird die Integration über den Weg bzw. über den Winkel φ durch eine Differentiation der Winkelgeschwindigkeit ω nach der Zeit t ersetzt. Es lässt sich nun folgender allgemeiner Zusammenhang für das vom Elektromotor abgegebene Drehmoment $M_{Mot}$, das durch trockene Reibung verursachte Lastmoment $M_{Fric}$ und das durch Geschwindigkeitsänderungen $\Delta\omega^2$ verursachte Lastmoment angeben:

$$E = k_{Mot} \cdot \int_{t_1}^{t_2} I_{Mot} \cdot \omega \cdot dt = M_{Fric} \cdot \Delta\varphi + \frac{1}{2} \cdot J \cdot \Delta(\omega^2) \qquad (1)$$

Für den Drehimpuls wird das Momentengleichgewicht über die Zeit integriert. Analog zur Bestimmung der Energie gilt für den Drehimpuls folgender Zusammenhang:

$$L = k_{Mot} \cdot \int_{t_1}^{t_2} I_{Mot} \cdot dt = M_{Fric} \cdot \Delta t + J \cdot \Delta\omega \qquad (2)$$

Das zur Bestimmung der Energie verwendete erste Intervall muss dabei nicht zwangsläufig identisch sein mit dem zur Bestimmung des Drehimpulses verwendeten zweiten Intervall. Hier ist es lediglich wichtig, dass das zugrundeliegende Gleichungssystem durch wählen der entsprechenden Intervalle lösbar ist. Das durch trockene Reibung verursachte Lastmoment $M_{Fric}$ wird dabei für das Intervall als näherungsweise konstant angenommen. Die Zeit t ist dabei die Systemzeit, $\Delta t$ ist die Dauer des Intervalls $t_1$ bis $t_2$.

Es können schließlich die Lastgrößen mit jeweils einer eigenen unabhängigen Gleichung ermittelt werden, wobei für die Lastgrößen jeweils ein geeignetes Intervall zu wählen ist.

Das erfindungsgemäße Verfahren ist besonders vorteilhaft, da durch die integrale Bestimmung der zugrundeliegenden Größen sich eine entsprechende Robustheit gegenüber Messfehlern oder Modelfehlern einstellt. Besonders vorteilhaft ist dabei die Möglichkeit, mit den Intervallen für die jeweiligen Lastgrößen optimale oder zumindest akzeptable Zeitpunkte zur Bestimmung zu steuern.

In einer weiteren Ausführungsform werden als Lastgröße zumindest ein Trägheitsmoment, ein Reibmoment und/oder äquivalente Größen bestimmt. Ein mögliches Äquivalent zum Trägheitsmoment ist die Masse und ein Äquivalent zum Reibmoment ist die Reibkraft. Es ist aber ebenso denkbar, dass weitere davon abhängige/bzw. dazu äquivalente Größen bestimmt werden, die für manche Anwendungen besser weiterzuverarbeiten sind oder schlichtweg auf Basis der zur Verfügung stehenden Messgrößen effektiver zu errechnen sind.

In einer weiteren Ausführungsform wird das jeweilige Intervall in Abhängigkeit eines Fahrprofils des antreibbaren Objekts gewählt. Dies ist besonders vorteilhaft, wenn beispielsweise ein Fahrprofil, z.B. durch eine Steuerung, vorgegeben wird. So können standardmäßig an geeigneten Stellen während des Durchfahrens des Fahrprofils jeweils die Lastgrößen bestimmt werden. Dies kann auch mehrfach während einer Fahrt geschehen.

In einer weiteren Ausführungsform entspricht zur Ermittlung von zumindest einer der Lastgrößen das erste Intervall dem zweiten Intervall. Besonders vorteilhaft ist es, wenn eine oder sogar mehrere Lastgrößen in einem gemeinsamen Intervall ermittelt werden. Dies ermöglicht z.B. eine dauerhaft während des Betriebs mitlaufende Lastgrößenermittlung die somit auch eine Live-Überwachung der Lastgrößen ermöglicht. Weiterhin vorteilhaft ist die Ermittlung der Lastgrößen in einem gemeinsamen Intervall, da so die Lastgrößen aus einem gemeinsamen Intervall bekannt sind und damit eine höhere Vergleichbarkeit existiert.

Falls die Lastgrößen nicht konstant sind und/oder vom momentanen Arbeitspunkt abhängen, empfiehlt sich die gemeinsame Bestimmung des Drehimpulses und der Energie in einem gemeinsamen Intervall, da so beide Größen auf dem gleichen Mittelwert beruhen. Insbesondere gilt dies für gemischte Lasten, wie z.B. trockener und viskoser Reibung.

In einer weiteren Ausführungsform werden in den Intervallen mehrere Lastgrößen bestimmt und abhängig vom Arbeitspunkt einzelne Lastgrößen verworfen. Es ist besonders vorteilhaft, wenn abhängig vom Arbeitspunkt einzelne Lastgrößen verworfen werden können. Ist ein Verfahren zur Ermittlung von Lastgrößen erst einmal zum Onlinebetrieb bzw. zur Verwendung im laufenden Betrieb eingerichtet, so kann dies ohne weiteres mitlaufen. Es ist nun denkbar, dass einzelne Werte bestimmten Qualitätskriterien nicht entsprechend, weil beispielsweise die Randbedingungen im dazugehörigen Intervall nicht ausreichend waren. So können solche qualitativ ungenügenden Werte verworfen werden. Als Ersatz können beispielsweise vorherige Werte, geschätzte zukünftige oder ein gemittelte Werte zum Einsatz kommen, damit eine stetige Ermittlung von Parametern erreicht werden kann.

In einer besonders vorteilhaften Ausführungsform wird als Lastgröße ein Reibmoment als trockene Reibung modelliert. In diesem Fall können Reibmomente als trockene Reibung, die in einem bestimmten Arbeitspunkt immer konstant ist, moduliert werden. Dies vereinfacht die notwendigen Berechnungen und das Durchführen des Verfahrens wird einer breiteren Hardwareplattform zugänglich.

In einer weiteren Ausführungsform wird als Lastgröße ein Reibmoment als eine Kombination aus trockener und viskoser Reibung modelliert. Sollen nun genauere Ergebnisse produziert werden, so ist es denkbar, nicht nur die trockene Reibung zu berücksichtigen, sondern es könnte ebenso die durch viskose Reibung verursachten Lastgrößen berücksichtigt werden. Die viskose Reibung ist dabei abhängig von der Geschwindigkeit in einem bestimmten Intervall. Eine derartige Modellierung erhöht die Genauigkeit eines derartigen Verfahrens und ist besonders geeignet auf entsprechend leistungsfähiger Hardware implementiert zu werden. Folgende Gleichung zeigt die grundlegende n Zusammenhänge zwischen abgegebenem Motordrehmoment, trockenen und viskosen Reibmomenten $M_{FricD}/M_{FricV}$ und durch Geschwindigkeitsänderungen verursachtes Lastmoment $M_{ACC}$.

$$M_{Mot} = M_{FricD} + M_{FricV} + M_{Acc} \qquad (3)$$

In einer weiteren vorteilhaften Ausführungsform werden zur Ermittlung des Trägheitsmoments in einem elastischen System, das erste und das zweite Intervall derart gewählt, dass bei Beginn des ersten und des zweiten Intervalls die gleiche Beschleunigung vorliegt, wie bei Ende des ersten und des zweiten Intervalls. Dies ermöglicht es nicht nur Lastgrößen für Systeme, die eine steife Verbindung zwischen Elektromotor und der angeschlossenen Last aufweisen, zu berechnen, sondern es ist so auch möglich die in der Realität ebenfalls auftretenden elastischen Systeme mit dem vorliegenden Verfahren zu berechnen. Ein elastisches System liegt dann vor, wenn im Antriebsstrang elastische Elemente angeordnet sind. Dies können bspw. Riemen, elastische Wellen oder auch Federmechaniken, bspw. zur Einkopplung von Türen, sein. Dabei ist es denkbar, dass zu jedem möglichen Startpunkt eine Überwachungseinheit überwacht ob ein für das Verfahren möglicher Endpunkt mit einer entsprechend gleichen Beschleunigung vorliegt. Somit kann das Messintervall beendet und die Lastgrößen bestimmt werden. Dies ist besonders vorteilhaft, da so der Einsatzbereich des vorliegenden Verfahrens auch auf elastische bzw. teilelastische Systeme erweitert werden kann.

In einer weiteren Ausführungsform wird eine Fehlermeldung ausgegeben, wenn zumindest eine der Lastgrößen einen Grenzwert überschreitet. Beispielsweise könnte das Reibmoment kontinuierlich überwacht werden. Damit können auch sich auf Dauer einstellende vergrößerte Reibungen, die beispielsweise durch Verschleiß im Antriebssystem auftreten können, überwacht werden. Wird also ein bestimmter Grenzwert oder sogar ein dynamischer Grenzwert überschritten, so kann eine Fehlermeldung ausgelöst und eine entsprechende Wartung durchgeführt werden. Es ist ebenso denkbar, dass der Reibungsverlauf überwacht wird und ausgehend von dem Reibungsverlauf oft mögliche Defekte zurückgeschlossen wird. Analog kann eine veränderliche Masse auf eine Blockierung oder einen Defekt hindeuten.

In einer weiteren Ausführungsform wird zumindest eine der Größen Motorstrom und/oder Winkelgeschwindigkeit sensorlos erfasst. Mit bekannten Motorkenngrößen und bekannten Leistungselektronikkenngrößen ist es möglich, den Motorstrom und/oder die Winkelgeschwindigkeit des Elektromotors sensorlos zu erfassen. So ist es möglich, das komplette Verfahren oder zumindest Teile des Verfahrens sensorlos durchzuführen, was zu einer erheblichen Vergünstigung der notwendigen Hardware führt. Es ist ebenso denkbar ein sensorloses Verfahren laufen zu lassen, dass von Zeit zu Zeit mittels echten Messwerten kalibriert oder überprüft wird.

In einer weiteren Ausführungsform werden die Lastgrößen drehrichtungs- und/oder leistungsrichtungsabhängig ermittelt. Werden z.B. Getriebe mit drehrichtungs- und/oder leistungsrichtungsabhängiger Charakteristik verwendet, so können diese Eigenschaften direkt mit dem vorliegenden Verfahren abgebildet werden. Dies gilt ebenso für jegliche weitere drehrichtungs- und/oder leistungsrichtungsabhängigen Mechaniken, beispielsweise von Türen, oder weiteren Teilen eines entsprechenden Antriebssystems. Das Verfahren ist dadurch besonders flexibel einsetzbar.

Die Aufgabe wird weiterhin durch ein Steuerungs- und/oder Regelungsverfahren für einen Elektromotor gelöst, der ein Objekt antreibt, wobei mittels eines erfindungsgemäßen Verfahrens ermittelte Lastgrößen bei der Ansteuerung des Elektromotors berücksichtigt werden. Das Berücksichtigen der Lastgrößen kann dabei beispielsweise durch eine Fehlergrößen-Aufschaltung geschehen. Besonders vorteilhaft ist, dass eine Steuerung bzw. eine Regelung die solche Last bzw. in dem Fall Störgrößen berücksichtigt, eine deutliche höhere Genauigkeit erreicht, als eine Steuerung bzw. eine Regelung die die Größen nicht berücksichtigt.

Weiterhin vorteilhaft ist es, wenn eine Vorsteuerung zumindest eine der Lastgrößen berücksichtigt. Eine Vorsteuerung ist dabei eine Art von Steuerung, d.h. ohne Feedback aus dem System, die Stellsignale bereits derart aufbereitet, dass ohne Störgrößen das System dem Steuersignal folgen kann. Werden nun in der Vorsteuerung bereits die Lastgrößen berücksichtigt, so erhöht sich die Genauigkeit der Vorsteuerung entsprechend. Es müssen so also lediglich echte Störgrößen, beispielsweise Einflüsse von außen, berücksichtigt werden. In manchen Fällen kann so gänzlich auf eine Regelung, d.h. auf eine Rückführung von Messwerten aus dem System, verzichtet werden.

Besonders vorteilhaft ist es, wenn eine Regelung zumindest eine der Lastgrößen berücksichtigt. Aufgabe eines Reglers ist es, eine Regeldifferenz (Differenz zwischen Soll- und Istwert) auszuregeln. Ist dem Regler nun bekannt, welche Masse bzw. welche Massenträgheit und welche Reibung im zu regelnden System herrschen, so kann dieser entsprechend ausgelegt werden. Die Modellierung des Reglers verbessert sich also entsprechend, und kann auch bei variablen bzw. zeitvarianten Lasten bzw. Lastgrößen nachgeführt werden. Die Regelung von zeitvarianten Systemen wird so erheblich vereinfacht oder überhaupt erst ermöglicht.

Weiterhin vorteilhaft ist es, wenn eine Trajektorienplanung zumindest eine der Lastgrößen berücksichtigt. Eine Trajektorienplanung ist dabei die Planung einer Trajektorie, z.B. einer Bewegungsstrecke über die Zeit, der das System idealerweise zu 100% folgen kann. Werden nun bei der Trajektorienplanung die Lastgrößen berücksichtigt, so ist es einfacher möglich, eine hohe Folgegenauigkeit zu erhalten. Eine Kombination von Trajektorienplanung, Vorsteuerung und/oder Regler ermöglicht dabei die Erzielung von ausgezeichneten Ergebnissen.

In einer weiteren Ausführungsform wird zumindest eine der Lastgrößen bei einer Begrenzung einer kinetischen Energie des antreibbaren Objekts berücksichtigt. Für manche Anwendungsfälle ist z.B. durch Normen eine Begrenzung der maximalen kinetischen Energie des antreibbaren Objekts vorgeschrieben. Dies ist beispielsweise bei elektrischen Türantrieben der Fall. Das vorliegende Verfahren kann einfach erweitert werden um eine Begrenzung der kinetischen Energie auf Basis der Lastgrößen zu berechnen. Es ist darauf hinzuweisen, dass die Energie, die im Verfahren selbst bestimmt wird die Gesamtsystemenergie ist und nicht etwa die kinetische Energie des antreibbaren Objekts.

In einer weiteren Ausführungsform wird zumindest eine der Lastgrößen bei einer Begrenzung einer Antriebskraft des antreibbaren Objekts berücksichtigt. Soll die maximale Antriebskraft begrenzt werden, so kann bei besserer Kenntnis des Reibmoments, aber auch weiterer Lastgrößen, eine im Verhältnis höhere Antriebskraft zur Verfügung gestellt werden, als bei Verfahren, bei denen das Reibmoment oder weitere Lastgrößen nicht berücksichtigt werden.

Die Aufgabe wird weiterhin durch eine Motorsteuerung zur Durchführung eines erfindungsgemäßen Verfahrens gelöst. Dazu weist die Motorsteuerung zumindest eine Vorrichtung zur Bestimmung einer integralen Funktion auf. Die Motorsteuerung kann dabei als eine Motorsteuerung ausgebildet sein, die einen entsprechenden Berechnungsteil zur Berechnung oder Bestimmung von integralen Funktionen aufweist. Die Motorsteuerung kann dabei derart ausgebildet sein, dass die mittels eines erfindungsgemäßen Verfahrens, z.B. durch integrale Funktionen, ermittelten Lastgrößen zur Ansteuerung eines Elektromotors berücksichtigt werden können. Das kann heißen, dass die Motorsteuerung direkt ein entsprechendes Stellsignal an den Motor ausgibt. Die Motorsteuerung kommt weiterhin vorteilhaft in einem Antriebssystem zur Durchführung eines erfindungsgemäßen Verfahrens zum Einsatz, wobei das Antriebssystem zumindest einen Elektromotor und eine Motorsteuerung aufweist, wobei der Elektromotor in Wirkverbindung mit einem antreibbaren Objekt steht.

Im Folgenden wird die Erfindung anhand der in den Figuren dargestellten Ausführungsbeispiele näher beschrieben und erläutert. Es zeigen:

FIG 1     eine schematische Blockdarstellung einer möglichen Ausführungsform des erfindungsgemäßen Verfahrens,

FIG 2     eine Möglichkeit, das erfindungsgemäße Verfahren zur Verbesserung einer Vorsteuerung und/oder einer Trajektorienplanung einzusetzen,

FIG 3     zeigt die Berücksichtigung von Lastgrößen direkt in einem Regler und

FIG 4     ein Antriebssystem zur Durchführung eines erfindungsgemäßen Verfahrens.

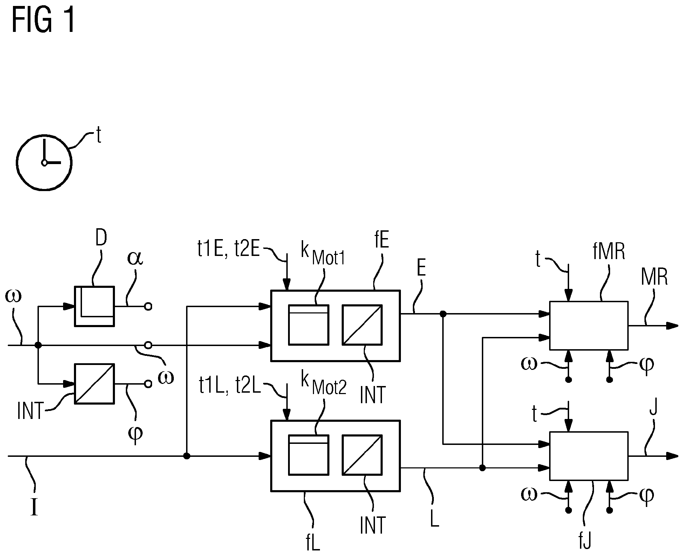

FIG 1 zeigt eine schematische Blockdarstellung einer möglichen Ausführungsform des erfindungsgemäßen Verfahrens. Global gilt die Systemzeit t, die hier mit einer Uhr dargestellt ist. Als Eingangsgrößen stehen eine Winkelgeschwindigkeit $\omega$ und ein Motorstrom I eines Elektromotors (nicht gezeigt) zur Verfügung. Der Motorstrom I und die Winkelgeschwindigkeit $\omega$ können dabei von entsprechenden Sensoren als Messwerte zur Verfügung gestellt werden. Es ist ebenso möglich, das gezeigte Blockschaltbild derart zu erweitern, dass die Winkelgeschwindigkeit $\omega$ aus anderen Messgrößen abgeleitet wird oder von nicht direkt Winkel ausgebenden Sensoren, wie Pulsanzahlen eines pulsenden Sensors oder Encoders, zur Verfügung gestellt wird. Ebenso kann der Strommesswert durch andere Werte substituiert werden, die einen Rückschluss auf den Strom I zulassen.

Aus der Winkelgeschwindigkeit $\omega$ wird durch den Differenzierer D die Winkelbeschleunigung a. Durch einen Integrierer INT wird aus der Winkelgeschwindigkeit $\omega$ der aktuelle Winkel $\varphi$. Die beiden Größen $\omega$ und I werden nun in eine erste integrale Funktion fE zur Bestimmung einer Energie E eingespeist. Die integrale Funktion fE weist dabei zumindest einen Integrator bzw. eine integrierende Komponente INT sowie eine erste Motorkonstante kMOT1 auf. Zusätzlich wird die integrale Funktion in einem Intervall t1E, t2E bestimmt. Es ist aber ebenso denkbar, dass die integrale Funktion fE kontinuierlich mitläuft, und der Ausgangswert der Energie E als eine Funktion der Energie E abhängig des Intervalls t1E, t2E abrufbar ist. Die erste integrale Funktion hat z.B. die Aufrufparameter: *fE(tlE,t2E),* wobei die weiteren zur Berechnung notwendigen Größen weiterhin mit einfließen, aber nicht zum Aufruf der Funktion benötigt werden.

Ähnlich zur ersten integrale Funktion fE existiert eine zweite integrale Funktion fL, zur Bestimmung eines Drehimpulses L. Diese weist ebenfalls einen Integrator INT sowie eine zweite Motorkonstante kMOT2 auf. Auch hier ist es denkbar, dass der Funktionsblock fL nur während des Intervalls t1L, t2L aktiviert ist, es ist aber ebenso denkbar, dass der Funktionsblock fL dauerhaft online mitläuft und der Drehimpuls L als eine Funktion des Intervalls t1L, t2L ausgegeben wird. Die zweite integrale Funktion hat dann bspw. die Aufrufparameter: *fL(t1L,t2L),* wobei die weiteren zur Berechnung notwendigen Größen weiterhin mit einfließen, aber nicht zum Aufruf der Funktion benötigt werden.

Die Motorkonstanten kMOT1, kMOT2 können dabei für den jeweiligen Einsatzzweck speziell modellierte Motorkonstanten kMOT1, kMOT2 sein. Ebenfalls möglich ist es, zumindest für den jeweiligen Arbeitspunkt, eine vereinfachte Modellierung einer unter einer einzigen Konstante subsummierten Motorkonstante kMOT1, kMOT2 zu wählen, so dass nur eine einzige Motorkonstante kMOT1, kMOT2 verwendet werden kann.

Die Energie E sowie der Drehimpuls L werden weiterhin zur Bestimmung von Lastgrößen J, MR verwendet. Die Lastgrößen J, MR werden jeweils in Abhängigkeit der eingangs bereits bestimmten Winkelgeschwindigkeit $\omega$ sowie des Winkels $\varphi$ und der Zeit t bestimmt. Die Zeit t kann dabei beispielsweise in eine Differenz eines Endzeitpunktes und eines Startzeitpunktes eines der oder aller Intervalle t1E, t2E, t1L, t2L mit einfließen. Beispielsweise könnte hier die Dauer des Betriebspunktes in dem die Lastgrößen bestimmt werden mit in die Berechnungen einfließen. In diesem Fall ist eine Lastgröße J, MR, beispielsweise das Trägheitsmoment J eines hier nicht gezeigten angetriebenen Objekts 100 und eine weitere Lastgröße J, MR ist das Reibmoment MR, das durch trockene Reibung entsteht.

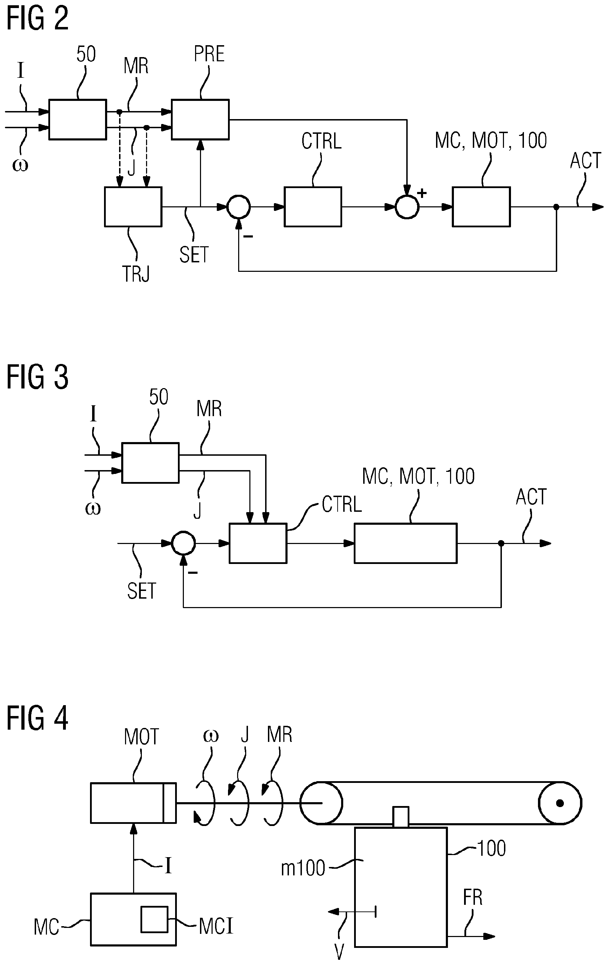

FIG 2 zeigt eine Möglichkeit, das erfindungsgemäße Verfahren zur Verbesserung einer Vorsteuerung PRE und/oder einer Trajektorienplanung TRJ einzusetzen. Im Block 50 ist dazu das bereits aus FIG 1 bekannte Verfahren implementiert, wobei aus einem Strom I und einer Winkelgeschwindigkeit $\omega$ die Lastgrößen MR, J bestimmt werden. Dies geschieht auf integrative Art und Weise und ist somit gegenüber Störungen und Rauschen besonders robust. Die Vorsteuerung PRE wirkt dabei direkt auf das Antriebssystem bestehend aus einer Motorsteuerung MC, einen Motor MOT sowie einen angetriebenen Objekt 100. Im Idealfall und ohne Störungen, wobei Veränderungen der Lastgrößen MR, J bereits berücksichtigt werden, ist das Antriebssystem MC, MOT, 100 in der Lage, den Sollwert SET als Istwert ACT umzusetzen. Es existiert im Störungsfreien zustand somit ein ideales Führungsverhalten.

Die Trajektorienplanung TRJ gibt eine Trajektorie, also beispielsweise einen Verlauf der Geschwindigkeit über die Zeit t oder einen Verlauf des Weges über die Zeit t jeweils bzgl. des bewegten Objektes 100, und gibt diesen als Sollwert SET vor. Die Vorsteuerung ermittelt unter Berücksichtigung der Lastgrößen MR, J den Stellwert wie eingangs beschrieben. Aus dem Sollwert SET und dem Istwert ACT wird die Regeldifferenz gebildet, die über eine Regelung CTRL ausgeregelt werden soll. Die Regelung CTRL kann in diesem Fall ideal auf die Störausregelung eingestellt werden, da bereits Lastgrößen MR, J berücksichtigt werden. Somit ergibt sich auch ein deutlich verbessertes Störverhalten.

FIG 3 zeigt unter Beibehaltung der Bezugszeichen aus FIG 2 die Berücksichtigung der Lastgrößen MR, J direkt im Regler CTRL. In diesem Fall werden beliebige Sollwerte SET vorgegeben, und eine Regeldifferenz zwischen den Sollwerten SET und den Istwerten ACT gebildet. Der Regler CTRL generiert direkt unter Berücksichtigung der Lastgrößen MR, J das Stellsignal für das Antriebssystem MC, MOT, 100. Auf diese Art und Weise kann der Regler CTRL hinsichtlich seiner Pol-Lagen und seiner Verstärkung besser auf die Systemgrößen bzw. auf die Lastgrößen MR, J eingestellt werden und so ist innerhalb der Systemgrenzen eine Vorgabe von beliebigen Stellwerten SET möglich, die dann durch den Regler CTRL möglichst genau in Istwerte ATC umgesetzt werden. Analog lässt sich das Störverhalten des Reglers besonders gut beeinflussen, da auf Störungen, die als Änderung der Lastgrößen J, MR auftreten bereits unabhängig reagiert werden kann.

FIG 4 zeigt eine mögliche Ausführungsform eines Antriebssystems, in dem ein erfindungsgemäßes Verfahren zum Einsatz kommt. Gezeigt ist ein Motor MOT, dem ein Strom I aus einer Motorsteuerungseinheit MC zur Verfügung gestellt wird. Spannungen werden in diesem Fall nicht betrachtet, könnten aber ebenso als äquivalente Größen verwendet werden. Eine Vorrichtung MCI ist zur Durchführung des erfindungsgemäßen Verfahrens vorgesehen. Der Motor MOT weist in diesem Fall eine Winkelgeschwindigkeit $\omega$ auf und als den Motor belastende Lastgrößen J, MR ist hier das Trägheitsmoment J und das Reibmoment MR angegeben. In diesem Fall handelt es sich um eine riemengetriebene Tür, die hier als angetriebenes Objekt 100 mit der Masse M100, also der Türmasse, gezeigt ist. Die Masse M100 ist entsprechend in eine rotatorische Größe des Trägheitsmoment J umrechenbar, die eingezeichnete Reibkraft FR ist entsprechend umrechenbar in das Reibmoment MR. Analog gilt, dass die Geschwindigkeit v des bewegten Objekts 100 in die Winkelgeschwindigkeit $\omega$ umrechenbar ist. Hier spielen die Radien der Riemenscheiben bzw. Ritzel eine Rolle.

**Patentansprüche**

1. Verfahren zur Ermittlung von zumindest einer Lastgröße (J, MR) eines durch einen Elektromotor (MOT) antreibbaren Objekts (100) im laufenden Betrieb, unter Verwendung eines Motorstroms (I) und einer Winkelgeschwindigkeit ($\omega$) des Motors (MOT), umfassend die Schritte:

   • Bestimmen einer Energie (E) in einem ersten Intervall (t1E, t2E) als eine erste integrale Funktion (fE) von Motorstrom (I) und der Winkelgeschwindigkeit ($\omega$) über eine Zeit (t) sowie einer ersten Motorkonstante (kMOT1) des Elektromotors (MOT),
• Bestimmen eines Drehimpulses (L) in einem zweiten Intervall (t1L, t2L) als eine zweite integrale Funktion (fL) von Motorstrom (I) über die Zeit (t) sowie einer zweiten Motorkonstante (kMOT2) des Elektromotors (MOT),
• Bestimmen zumindest einer der Lastgrößen (J, MR) im jeweiligen Intervall (t1E, t2E, t1L, t2L) unter Verwendung der Energie (E) und des Drehimpulses (L).

2. Verfahren nach Anspruch 1, wobei als Lastgröße (J, MR) zumindest ein Trägheitsmoment (J), ein Reibmoment (MR) und/oder äquivalente Größen bestimmt werden.

3. Verfahren nach Anspruch 1 oder 2, wobei das jeweilige Intervall (t1E, t2E, t1L, t2L) in Abhängigkeit eines Fahrprofils des antreibbaren Objekts (100) gewählt wird.

4. Verfahren nach einem der vorhergehenden Ansprüche, wobei zur Ermittlung von zumindest einer der Lastgrößen (J, MR) das erste Intervall (t1E, t2E) dem zweiten Intervall (t1L, t2L) entspricht.

5. Verfahren nach einem der vorhergehenden Ansprüche, wobei in den Intervallen (t1E, t2E, t1L, t2L) mehrere Lastgrößen (J, MR) bestimmt und abhängig vom Arbeitspunkt einzelne Lastgrößen (J, MR) verworfen werden.

6. Verfahren nach einem der vorhergehenden Ansprüche, wobei als Lastgröße (J, MR) ein Reibmoment (MR) als trockene Reibung modelliert wird.

7. Verfahren nach einem der vorhergehenden Ansprüche, wobei als Lastgröße (J, MR) ein Reibmoment (MR) als eine Kombination aus trockener und viskoser Reibung modelliert wird.

8. Verfahren nach einem der vorhergehenden Ansprüche, wobei zur Ermittlung des Trägheitsmoments (J) in einem elastischen System, das erste und das zweite Intervall (t1E, t2E, t1L, t2L) derart gewählt werden, dass bei Beginn (t1E, t1L) des ersten und des zweiten Intervalls (t1E, t2E, t1L, t2L) die gleiche Beschleunigung ($\alpha$) vorliegt, wie bei Ende (t2E, t2L) des ersten und des zweiten Intervalls (t1E, t2E, t1L, t2L).

9. Verfahren nach einem der vorhergehenden Ansprüche, wobei eine Fehlermeldung ausgegeben wird, wenn zumindest eine der Lastgrößen (J, MR) einen Grenzwert über- oder unterschreitet.

10. Verfahren nach einem der vorhergehenden Ansprüche, wobei zumindest eine der Größen Motorstrom (I) und/oder Winkelgeschwindigkeit ($\omega$) sensorlos erfasst wird.

11. Verfahren nach einem der vorhergehenden Ansprüche, wobei die Lastgrößen (J, MR) drehrichtungs- und/oder leistungsrichtungsabhängig ermittelt werden.

12. Motorsteuerung (MC), ausgebildet zur Durchführung eines Verfahrens nach einem der vorhergehenden Ansprüche, wobei die Motorsteuerung (MC) zumindest eine Vorrichtung (MCI) zur Bestimmung einer integralen Funktion (fL, fE) aufweist.

13. Antriebssystem ausgebildet zur Durchführung eines Verfahrens nach einem der Ansprüche 1 bis 11, aufweisend zumindest einen Elektromotor (MOT) und eine Motorsteuerung (MC) nach Anspruch 12, wobei der Elektromotor in Wirkverbindung mit einem antreibbaren Objekt (100) steht.

**Claims**

1. Method for determining at least one load variable (J, MR) of an object (100) which can be driven by an electric motor (MOT) during operation, using a motor current (I) and an angular speed ($\omega$) of the motor (MOT), comprising the steps:

 - determining an energy (E) in a first interval (t1E, t2E) as a first integral function (fE) of motor current (I) and the angular speed ($\omega$) over a time (t) and a first motor constant (kMOT1) of the electric motor (MOT),
 - determining an angular momentum (L) in a second interval (t1L, t2L) as a second integral function (fL) of motor current (I) over the time (t) and a second motor constant (kMOT2) of the electric motor (MOT),
 - determining at least one of the load variables (J, MR) in the respective interval (t1E, t2E, t1L, t2L) using the energy (E) and the angular momentum (L).

2. Method according to claim 1, wherein at least one moment of inertia (J), a friction moment (MR) and/or equivalent variables are determined as the load variable (J, MR).

3. Method according to claim 1 or 2, wherein the respective interval (t1E, t2E, t1L, t2L) is selected as a function of a driving profile of the drivable object (100).

4. Method according to one of the preceding claims, wherein the first interval (t1E, t2E) corresponds to the second interval (t1L, t2L) in order to determine at least one of the load variables (J, MR).

5. Method according to one of the preceding claims, wherein a number of load variables (J, MR) are determined in the intervals (t1E, t2E, t1L, t2L) and individual load variables (J, MR) are rejected as a function of the operating point.

6. Method according to one of the preceding claims, wherein a friction moment (MR) as dry friction is modelled as the load variable (J, MR).

7. Method according to one of the preceding claims, wherein a friction moment (MR) as a combination of dry and viscous friction is modelled as the load variable (J, MR).

8. Method according to one of the preceding claims, wherein in order to determine the moment of inertia (J) in an elastic system, the first and the second interval (t1E, t2E, t1L, t2L) are selected so that at the start (t1E, t1L) of the first and the second interval (t1E, t2E, t1L, t2L) the same acceleration ($\alpha$) exists as at the end (t2E, t2L) of the first and the second interval (t1E, t2E, t1L, t2L).

9. Method according to one of the preceding claims, wherein an error message is output if at least one of the load variables (J, MR) exceeds or does not reach a limit value.

10. Method according to one of the preceding claims, wherein at least one of the variables motor current (I) and/or angular speed ($\omega$) is detected in a sensorless manner.

11. Method according to one of the preceding claims, wherein the load variables (J, MR) are determined as a function of the direction of rotation and/or power direction.

12. Motor controller (MC), embodied to carry out a method according to one of the preceding claims, wherein the motor controller (MC) has at least one apparatus (MCI) for determining an integral function (fL, FE).

13. Drive system embodied to carry out a method according to one of claims 1 to 11, having at least one electric motor (MOT) and a motor controller (MC) according to claim 12, wherein the electric motor is actively connected to a drivable object (100).

**Revendications**

1. Procédé de détermination d'au moins une grandeur (J, MR) de charge d'un objet (100), pouvant être entraîné par un moteur (MOT) électrique, en fonctionnement courant, en utilisant un courant (I) de moteur et une vitesse ($\omega$) angulaire du moteur (MOT), comprenant les stades :

 • détermination d'une énergie (E) dans un premier intervalle (t1E, t2E) sous la forme d'une première fonction (fE) intégrale de courant (I) de moteur et de la vitesse ($\omega$) angulaire sur un temps (t) ainsi que d'une première constante (kMOT1) de moteur du moteur (MOT) électrique,
 • détermination d'un moment angulaire (L) dans un deuxième intervalle (t1L, t2L) de temps sous la forme d'une deuxième fonction (fL) intégrale de courant (I) de moteur sur le temps (t) ainsi que d'une deuxième constante (kMOT2) de moteur du moteur (MOT) électrique,
 • détermination d'au moins l'une des grandeurs (J, MR) de charge dans l'intervalle (t1E, t2E, t1L, t2L) respectif en utilisant l'énergie (E) et le moment angulaire (L).

2. Procédé suivant la revendication 1, dans lequel on détermine comme grandeur (J, MR) de charge au moins un moment (J) d'inertie, un moment (MR) de frottement et/ou des grandeurs équivalentes.

3. Procédé suivant la revendication 1 ou 2, dans lequel on choisit l'intervalle (t1E, t2E, t1L, t2L) respectif en fonction d'un profil de déplacement de l'objet (100) pouvant être entraîné.

4. Procédé suivant l'une des revendications précédentes, dans lequel, pour la détermination d'au moins l'une des grandeurs (J, MR) de charge, le premier intervalle (t1E, t2E) correspond au deuxième intervalle (t1L, t2L).

5. Procédé suivant l'une des revendications précédentes, dans lequel on détermine plusieurs grandeurs (J, MR) de charge dans les intervalles (t1E, t2E, t1L, t2L) et on rejette certaines grandeurs (J, MR) de charge en fonction du point de travail.

6. Procédé suivant l'une des revendications précédentes, dans lequel on modélise comme grandeur (J, MR) de charge un moment (MR) de frottement sous la forme d'un frottement sec.

7. Procédé suivant l'une des revendications précédentes, dans lequel on modélise comme grandeur (J, MR) de charge un moment (MR) de frottement sous la forme d'une combinaison d'un frottement sec et d'un frottement visqueux.

8. Procédé suivant l'une des revendications précédentes, dans lequel, pour déterminer le moment (J) d'inertie d'un système élastique, on choisit le premier et le deuxième intervalle (t1E, t2E, t1L, t2L) de manière à avoir la même accélération ($\alpha$) au début (t1E, t1L) du premier et du deuxième intervalle (t1E, t2E, t1L, t2L) qu'à la fin (t2E, t2L) du premier et du deuxième intervalle (t1E, t2E, t1L, t2L).

9. Procédé suivant l'une des revendications précédentes, dans lequel on émet un message de défaut si au moins l'une des grandeurs (J, MR) de charge devient inférieure ou supérieure à une valeur limite.

10. Procédé suivant l'une des revendications précédentes, dans lequel on détecte sans capteur au moins l'une des grandeurs courant (I) de moteur et/ou vitesse ($\omega$) angulaire.

11. Procédé suivant l'une des revendications précédentes, dans lequel on détermine les grandeurs (J, MR) de charge en fonction du sens de rotation et/ou du sens de la puissance.

12. Commande (MC) de moteur, constituée pour effectuer un procédé suivant l'une des revendications précédentes, dans laquelle la commande (MC) de moteur a au moins un dispositif (MCI) de détermination d'une fonction (fL, fE) intégrale.

13. Système d'entraînement constitué pour effectuer un procédé suivant l'une des revendications 1 à 11, comportant au moins un moteur (MOT) électrique et une commande (MC) de moteur suivant la revendication 12, dans lequel le moteur électrique est en liaison d'action avec un objet (100) pouvant être entraîné.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014201399 A1
- JP H05332875 A
- US 2001037691 A1
- US 5428285 A
- US 2010226157 A1